# EUROPEAN PATENT SPECIFICATION

(11) **EP 1 804 625 B1**
(45) Date of publication and mention of the grant of the patent: **05.03.2008**
(21) Application number: 05772587.1
(22) Date of filing: 15.07.2005
(51) Int. Cl.: A47G 27/04, B60N 3/04, D06N 7/00

(54) **ANTI-SLIP LINING**
RUTSCHFESTE VERKLEIDUNG
ELEMENT DE RECOUVREMENT ANTIDERAPANT

(30) Priority: 15.07.2004 EP 04447177
(43) Date of publication of application: 11.07.2007
(73) Proprietor: Domo NV, 9700 Oudenaarde (BE)
(72) Inventor: HAENTJENS, Tony, B-9700 Oudenaarde (BE); TUYTENS, Guido, B-8700 Tielt (BE)
(74) Representative: Brants, Johan P.E.
(86) International application number: PCT/EP2005/007735
(87) International publication number: WO 2006/005625

(56) References cited:
- EP-A- 1 325 845
- FR-A- 2 708 183
- US-A- 4 424 250
- US-A- 5 380 574
- US-B1- 6 440 341
- PATENT ABSTRACTS OF JAPAN vol. 1996, no. 05, 31 May 1996 (1996-05-31) -& JP 08 002303 A (DAIKYO INC), 9 January 1996 (1996-01-09)
- PATENT ABSTRACTS OF JAPAN vol. 1997, no. 09, 30 September 1997 (1997-09-30) -& JP 09 119056 A (NISSAN MOTOR CO LTD), 6 May 1997 (1997-05-06)

## Description

### Field of the invention

The present invention relates to carpet-protecting linings. In particular, the present invention relates to a lining, and more particularly to a removable lining, e.g. a floor mat, designed to overlie and protect carpeted floors, e.g. floors in automobiles and other motor vehicles or other carpeted surfaces, e.g. in private houses, buildings.

### Background

Floor mats are frequently used for covering carpeted surfaces. For instance, floor mats are provided in entryways to office buildings and other heavy traffic areas, where such protective mats are used frequently to protect relatively expensive carpeting. They may also be used for covering any type of domestic mats, e.g. mats used for cleaning shoes in the entryways of a domestic house, etc...

Document US-A-5 380 574 discloses an anti-slip lining having a laminated structure and comprising an anti-slip layer (A) attached by means of an adhesive layer (B) to a carpet layer (C). The anti-slip layer consists of different layers, including a basic fabric (a1) which is provided in between and needled together with two non-woven fabrics (a2). The fabrics (a2) are obtained by needling punching and consist of thermoplastic resin fibers. In addition, pile yarns (b) are implanted in the anti-slip layer. As shown in Figure 3 of US-A-5 380 574, the tip of the cut piles undergo a heat treatment such that the heads of the pile yarns swell and provide a better gripping in an underlying carpet or the like.

Protecting floor mats are also more and more frequently used in motor vehicles so as to protect the carpeted floor of automobiles from dirt, moisture and from wear and tear. Such mats are generally manufactured with a planar configuration and are customarily made of an elastomeric material sufficiently flexible to conform, in a general way, when placed in use, to the multiplicity of shapes and contours characteristic of today's automobile floors. Generally, such floor mats are provided with textile surfaces for improving comfort and for providing a warm feeling in the vehicle.

It is an important requirement that such floor mats should be removable and should not slip despite the fact that they can be removed from the carpeted floor.

In the automobile sector, a primary concern with respect to such automobile floor mats is their tendency to shift or move from their intended position in response to lateral forces experienced during occupant ingress, egress and in the course of normal driving operations. This can result in the bunching, gathering and general disarray of the mat on the automobile floor. Moreover, movement of the floor mat on the driver's side can present a significant safety hazard if the mat shifts so as to interfere with the accelerator, brake pedal or other automobile controls. This may lead to the dangerous situation wherein the floor mat is moved forward by the heel of a driver and wherein the brake and/or the accelerator pedal becomes blocked. Automobile manufacturers have experienced major liability claims related to alleged floor mat movement, not to mention the toll in human suffering, property damage and increased insurance premiums arising from auto accidents. It is therefore important to prevent moving and slipping of such secondary floor mats in order to ensure a high security during driving. Mat movement is, therefore, considered a serious and significant concern in the automobile industry.

There have been a number of attempts made in the prior art to form floor mats which resist movement on carpeted surfaces.

It has been proposed to use clips for fixing secondary mats on a carpeted floor. However, when using clips to fix the floor mats, the danger that the mats will be moved and slip remains because the carpet may tend to wrinkle and show bulges and valleys as a result of variable climate conditions or because the clips may become loose with increasing age and wear of the carpet.

Attempts have also been made in the past to increase the coefficient of friction between the mat and the supporting carpeted automobile floor. Particular attention has been drawn to the backside of the secondary mats, the so-called "backing" of the mat. US patent n° 5,380,574 for instance describes a car floor mat of which the backing consists of a laminated mat. The laminate mat consists of a base fabric which is needled together with a non woven fabric. Pile yarns are implanted in the laminate mat in such manner that the cut ends of the piles extend from the reverse side of the laminated mat. The pile yarns are fixed in the backing by means of an adhesive.

In addition, there has been proposed to use coatings comprising one or more binders as backing material. Examples of binders used in the art comprise rough rubber floor or granulates. Such backings however, frequently lead to the development of bad smells and to so-called fogging. Furthermore, these binders can not be recycled and during application they may be water-polluting. Moreover, production of this type of the secondary mats is particularly expensive. In addition, such backings generally provide hardly any acoustic effects.

Although providing increased slip resistance, the above described efforts have thus not been totally successful in eliminating mat slippage and, in some cases, have been accompanied by undue complexity and manufacturing expense. Thus, there remains a substantial need in the art for providing improved carpet-protecting linings, and in particular floor mats.

It is therefore an object of the invention to provide an improved lining having non-slip characteristics when placed on top of a carpeted surface.

It is another object of this invention to provide an anti-slip lining having a uniform consistency, no unpleasant odor, and a clean and esthetic appearance.

It is still another object of this invention to provide an anti-slip underlay, i.e. an anti-slip layer, having a lower surface that does not slip on a carpeted surface.

### Summary

In one aspect, the present invention relates to an anti-slip layer having anti-slip properties. The anti-slip layer is suitable for being applied as a carpet backing layer. The anti-slip layer substantially consists of a structured needle felt forming back loops projecting from the underside of said layer, and is particularly further characterized in that the underside of said anti-slip layer and the back loops projecting there from are thermally compressed.

The present anti-slip layer is made of a *"structured needle felt",* i.e. of a non woven material which has been needle punched by means of a special type of punching needles, in particular fork needles, in order to form loops on one side of the material. The back loops projecting from the present needle felt material are thus originating from the material itself and do not comprise external or additional yarns that have been introduced or tufted in the material. More in particular, the "structured needle felt" according to the invention is a needle felt material that is obtained by a needle felting process, involving needle felting using barbed needles, followed by needling felting using fork needles.

The term *"thermally compressed"* as used herein refers to loops that have undergone a heat treatment in order to be compressed and to form resin beads having a harder and rougher structure than the non-treated back loops. Thermal treatment of the underside of the anti-slip layer allows providing a layer of which the underside and the loops projecting there from have obtained a compressed and rougher structure. As a consequence of this thermal treatment the back loops are compressed, obtain a "beady" structure and become rougher and harder, which improves their ability of gripping themselves into an underlying carpeted surface. A layer having improved slipping resistance can thus be obtained.

An important advantage is that the anti-slip layer does not have to be provided with coating or adhesive for being fixed onto an underlying carpeted surface. The use of polluting binders such as e.g. rough rubber floor or granulates, can thus be avoided. Instead, the thermally compressed back loops on the anti-slip layer provide a type of "Velcro" sticking on an underlying carpeted surface. The anti-slip layer contains thermally compressed back loops while a carpeted surface generally contains loops. When anti-slip layer and carpeted surface are pressed together, the compressed back loops can easily penetrate in between the loops of the carpet and the layer and the carpet form a strong bond. As a result of the gripping of the back loops into the carpet loops, the layer is able to resist movements from forces exerted thereupon over a wide variety of angles and directions.

In a preferred embodiment, the anti-slip layer according to the invention is a needle punched non woven material. In another preferred embodiment, the anti-slip layer substantially comprises needled felt fibers, preferably synthetic fibers, and even more preferred polypropylene fibers, polyester fibers or mixtures thereof. The use of this type of fiber material is particularly beneficial from a noise-reducing point of view. The open structure of the anti-slip layer, which is obtained by needle punching, provides good sound absorption.

This anti-slip layer according to the invention is particularly useful for being applied in a lining. Therefore, the invention also relates in another embodiment to an anti-slip lining for covering a carpeted surface, for instance for covering a carpeted floor in a house, building, or in an automobile or other vehicle such as a truck, van or the like. In particular, the anti-slip lining has a composite carpet structure comprising a (decorative) carpet layer and an anti-slip layer according to the present invention which is attached to the underside of said carpet layer. Due to the improved characteristics of the anti-slip layer applied in the lining, a carpet-protecting lining is provided which has improved anti-slip properties and improved acoustic and noise-reducing capacity.

Importantly, the anti-slip layer may be attached to the carpet layer according to any known conventional bonding technique, e.g. by using adhesives, coatings, etc... Advantageously, the anti-slip layer according to the present invention is directly attached to the carpet layer. There is no further layer in between the carpet layer and the anti-slip layer.

The invention further relates to a method for fabricating an anti-slip layer according to the present invention. Said method is substantially based on needle punching process using barbed needles, followed by a needle punching process using fork needles, further followed by a heat treatment of the obtained needle punched material.

The present invention also further relates to a method for producing said anti-slip lining. The method is substantially based on bonding of the anti-slip layer on the carpet layer. For that, any conventional bonding technique may be applied. Advantageously, the lining can be manufactured at moderate cost from readily-available commercial materials.

The objects, features and advantages of the present invention are readily apparent from the following detailed description of the best modes for carrying out the invention when taken in connection with the accompanying drawings.

### Detailed description of the figures

FIG. 1 is a schematic front view of a web of fibers 5 that will be subjected to a needle punching process using barbed needles 12.
FIG. 2 shows a flat non woven needle felt material 9 obtained after the needle punching process as illustrated in Fig. 1 that will be subjected to a needle punching process using fork needles 13.
FIG. 3 and 4 represent a partial section of embodiments of an anti-slip layer 1 according to the invention.
FIG. 5 represents a partial section of an embodiment of an anti-slip lining 3 according to the present invention.

### Detailed description of the invention

The present invention relates to an anti-slip layer and an anti-slip lining comprising such layer as underlay for covering a carpeted surface. The present anti-slip layer substantially prevents slipping of the lining when applied on a carpeted surface, preferably the carpeted floor surface of an automobile or other vehicle. The anti-slip layer may be applied as a backing and affixed to the underside of a conventional carpeted structure in order to form a floor mat. The anti-slip layer substantially prevents slipping of the floor mat when the latter is applied on a carpeted surface. These carpeted surfaces may include but are not limited to carpets having short or long back loops, velour carpets, velvety carpets, moquettes, rugs, etc.... tufted cut pile carpet, velour carpets, dilour non woven carpets, flat needle felt carpets etc.... Advantageously, the anti-slip layer will provide an anti-slipping effect to most types of carpeted surfaces. The anti-slip lining is thus universally applicable.

The present anti-slip layer, as described herein, is particularly suitable for being used as a backing. Such backing is generally affixed to a pile fabric (carpet layer), in order to form a floor mat for inhibiting slippage on a carpeted surface. However, it shall be understood that the present anti-slip layer is not limited to the use as backing. The present textile fabric may also be applied for the production of carpets, runners, automotive components, and materials for furnishing and industrial applications.

In a first embodiment, the present invention relates to a removable anti-slip lining, in particular a floor mat, for inhibiting slippage on a carpeted surface comprising a carpet layer and an anti-slip layer that is attached to the underside of said carpet layer, wherein said anti-slip layer substantially consists of a structured needle felt forming back loops projecting from the underside of said layer, and wherein the underside of said anti-slip layer and the back loops projecting there from are thermally compressed.

The present invention provides an anti-slip layer having the following properties: it greatly diminishes the risk of slipping of the lining when applied on a carpeted surface. It further reduces wear and tear and improves durability of the covered carpeted surface. Furthermore, it provides sufficient resistance and stability to the lining in the longitudinal and the transverse direction against slipping and deformation. In addition, it permits to reduce noise and provides some thermal isolation. Its manufacturing process is simple and cost-effective.

The term *"needle felt"* as used herein refers to a felt, i.e. a non woven material which has been needle punched. The term *"needle felting"* or *"needle punching"* as used herein refers to the well known manufacturing process whereby steel needles are moved in and out the felt material, e.g. a flat non woven material comprising fibers, such that the fibers are reoriented in the material. Felting is done with barbed needles, which grab individual fibers and drag them against their neighbors, thereby binding them. Needle-punched non wovens thus comprise materials that are created by mechanically orienting and interlocking the fibers in the material.

The term *"structured needle felt"* as used herein refers to needle felt material -as defined above- that has been further processed by means of a special type of punching needles, in order to form loops on one side of the material. In said further needle felting process, a special type of needles, also called fork needles, are used, which carry tufts of fibers into lamella bars, provided in the needle felting apparatus.

A particular characteristic and advantage of the material of the anti-slip layer according to the present invention is that no pile yarns or other type of yarns need to be tufted in the material in order to form back loops, a process which is not only difficult but also expensive. In the present invention, the back loops are originating from the material itself, and formed as a consequence of the second needle punching process using fork needles. Moreover, since no additional yarns are used in the present anti-slip layer material, it is not required to use any kind of expensive and environmental-unfriendly binder material for binding said yarns in the material. Avoiding the use of such binders, the present invention provides the important advantage that the anti-slip layer can be easily recycled with no substantial risk for environmental pollution.

The anti-slip layer according to the invention substantially consists of a needle felt material. The term *"substantially'* as used in this context refers to a layer wherein the materials in the layer consist for more than 75 % w/v, preferably more than 85 % w/v, and more preferred more than 95 % w/v of needle felt material. In a particularly preferred embodiment the present anti-slip layer is solely made of the needle felt material.

The anti-slip layer according to the invention thus substantially comprises needled felt fibers. The present anti-slip layer does not comprise a mesh or a binder for reinforcement. The term *"substantially'* refers to a layer wherein the fibers constitute more than 60 % w/v, preferably more than 80 % w/v, and more preferred more than 95 % w/v of the material.

Preferably the needled felt fibers used in the anti-slip layer according to the present invention substantially comprise synthetic fibers, and preferably any type of thermoplastic fiber. In a particularly preferred embodiment, the needled felt fibers comprise synthetic needled felt fibers selected from the group comprising polyolefin fibers such as propylene fibers, polyethylene fibers, polyester fibers, polyamide fibers, polyacrylic fibers, polyvinyl fibers, polyaldehyde fibers, polycarbonate fibers or any mixtures thereof. In a preferred embodiment, the anti-slip layer according to the present invention comprises needled felt fibers that are all made of synthetic fibers, and the layer does not comprise natural fibers. In a preferred embodiment, the anti-slip layer according to the invention comprises needled felt fibers which are all made of polyester. In another preferred embodiment, the anti-slip layer according to the invention comprises needled felt fibers that are all made of polyethylene. In yet another embodiment the anti-slip layer according to the invention comprises needled felt fibers that are all made of polypropylene.

The underside of the anti-slip layer and its back loops projecting there from are thermally compressed. The underside of the anti-slip layer has been thermally treated in order to produce a surface that will cling into a carpeted surface when positioned thereon. The heat treatment induces at least partial melting of the fibers at the surface of the anti-slip layer. Due to the thermal treatment, the treated surface of the anti-slip layer becomes a mass of partially melted synthetic fibers that are fixed so that they do not easily come apart as they would from a pressed mass of loose fibers; and yet the underside-melted layer does provide some extending back loops that are capable of becoming entangled with an underlying carpeted surface and providing holding power to prevent sliding of the anti-slip layer over a carpet.

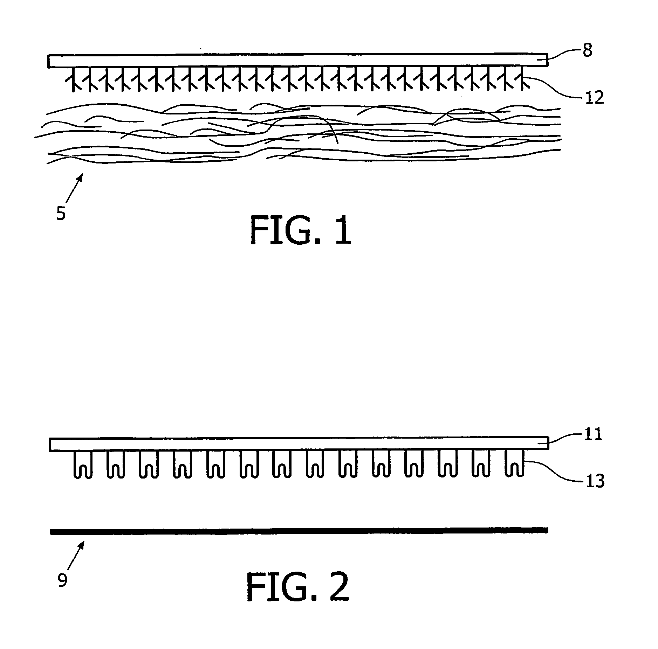

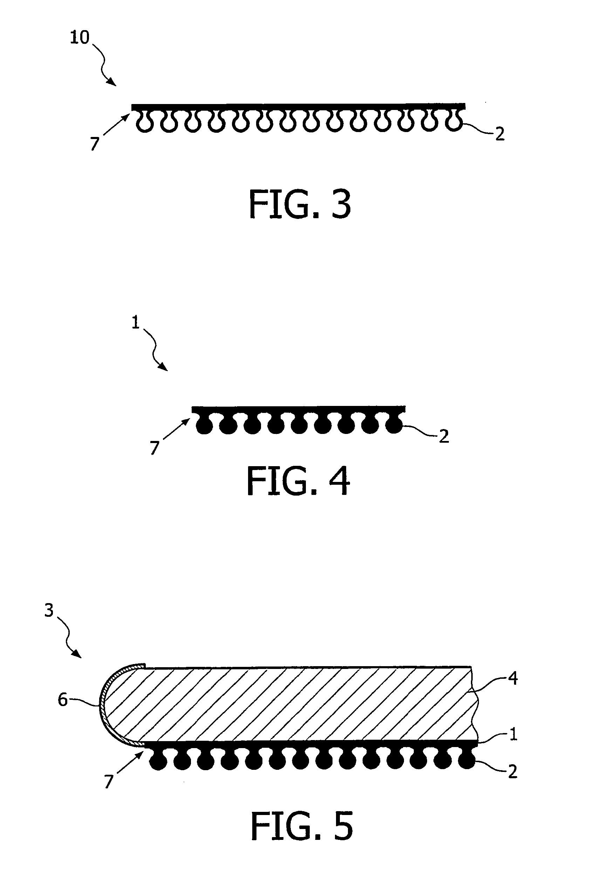

Referring to FIG. 2, a needle punched material 9 is illustrated before further needle punching. FIG. 3 illustrates a structured needle punched material 10 forming back loops 2 before heat treatment. The structured needle felt 10 has back loops 2 projecting from the underside 7 thereof. The back loops form part of the needle felt material and have not been externally tufted into the needle felt material. As a result of the thermal treatment of the underside of the material 10, as illustrated in FIG. 4, the underside 7 of the anti-slip layer 1 obtains a hard and compressed structure. Also the back loops 2 projecting from the underside of the layer obtain a "beady", hard and rough structure.

The anti-slip layer according to the present invention is characterized by a number of technical parameters such as type of fibres, weight, loop structure, thickness, etc... Such parameters are chosen and composed in such a way that an anti-slip layer is obtained which complies with optimal gripping and anti-slip characteristics. The technical parameters of a anti-slip layer according to the present invention are discussed in more detail below.

In one embodiment, anti-slip layer according to the present invention has a number of beady loops per cm² of the surface of the anti-slip layer, which are obtained after heat treatment of the anti-slip layer, which may be comprised between 1 and 10, and preferably between 3 and 8.

The dimensions and the shape of the back loops are not to be considered as limited for the present invention. In an embodiment, the back loops may form loops on the backside of the anti-slip layer. However, it will be clear that other geometrical configuration may be provided as well, such as e.g. conical forms, spikes, rods, etc...ln a preferred embodiment the present anti-slip layer is characterized in that the height of the back loops projecting from the underside of the anti-slip layer is between 0.2 and 2 cm, and preferably between 0.2 and 1 cm, and preferably between 0.2 and 0.8 cm and preferably between 0.2 and 0.4 cm.

The anti-slip layer advantageously has a thickness comprised between 0.1 and 1 cm, and preferably between 0.2 and 0.5 cm. At such thicknesses, the operation of bonding the anti-slip layer to another layer, e.g. a carpet layer or a bonding layer, is facilitated. Moreover, at such thicknesses the non-slip characteristics of the layer are realized. In particular, the present anti-slip layer is particularly suitable for preventing slipping on a carpeted surface such as non woven carpets, velour carpets, velvety carpets, moquettes, rugs, etc...

In another preferred embodiment, back loops are uniformly distributed over the complete surface of the anti-slip layer. Alternatively, in another embodiment, back loops may be distributed over defined surface areas of the anti-slip layer.

In another preferred embodiment, the back loops are arranged in parallel rows on the underside of said anti-slip layer, for instance as a raster structure. Preferably, the distance between two adjacent rows of back loops is comprised between 0.1 and 20 cm (0,039" and 7.87"), and preferably between 0.3 and 3 cm, preferably between 0.3 and 1.5 cm and preferably comprised between 0.5 and 1.0 cm. In an example, the back loops may be uniformly distributed in an orthogonal raster on the complete surface of the anti-slip layer as to provide optimal slipping resistance. Distances between adjacent back loops in such raster structure (measured from centre to center) are preferably comprised between 0.1 and 20 cm (0,039" and 7.87"), and preferably between 0.5 and 1.5 cm, and preferably between 0.7 and 1 cm.

In another embodiment, the anti-slip layer comprises a weight per unit area from 280 to 800 g/m², and for instance from 350 to 500 g/m².

It is further noted that different types of tests performed on the anti-slip layer according to the invention, including wheel abrasion tests, tests for checking tensile strength and tensile elongation of the anti-slip layer all provided satisfactory results. The tensile strength is defined as the resistance of a material to a force tending to tear it apart, measured as the maximum tension the material can withstand without tearing. The tensile elongation is defined as the percentage increase in length that occurs before the fabric breaks under tension.

The present anti-slip layer preferably covers substantially the entire underside of the carpet layer to which it is bonded, providing an aesthetically attractive surface on a conveniently fabricated carpet layer and providing good gripping properties to an underlying carpet surface. The term "substantially", as used in this context refers to a coverage by more than 50 %, preferably more than 80 %, and more preferred more than 90 % of the underside surface of the carpet layer. In a particularly preferred embodiment, the present anti-slip layer present covers more than 95 % of the underside surface of the pile fabric.

The anti-slip layer according to the invention is particularly suitable for being applied in a carpet-protecting lining. Therefore, the present invention also provides for an anti-slip lining comprising an anti-slip layer according to the present invention. In a preferred embodiment, said anti-slip lining comprises a carpet layer and an anti-slip layer attached to the underside of said carpet layer. The lining according to the present invention is characterized in that the carpet layer and the anti-slip layer are directly attached to each other without the need for additional intermitting bonding layers in between the carpet and the anti-slip layer. Any type of binding techniques may be applied for attaching an anti-slip layer according to the present invention to a carpet layer in order to obtain a lining according to the present invention. The anti-slip layer is preferably secured to a carpet layer with an appropriate bonding agent. The bonding agent is preferably compatible for adhesion to both anti-slip layer and the carpet layer, as well as preferably suitable for environment conditions involving e.g. wide temperature fluctuations. In an example, the anti-slip layer may be attached to a carpet layer by gluing or by using a polymer adhesive. In a preferred embodiment of the invention, the anti-slip lining is provided with a carpet layer and the anti-slip layer which are attached to each other by means of an adhesive, such as for instance acrylic adhesive (acrylate), synthetic rubber adhesive, vinyl acetate adhesive or a hot melt adhesive, and preferably a hot melt adhesive. Preferably, the adhesive also provides a vapor barrier within the anti-slip lining or mat. A layer of TPO (thermoplastic olefin) can for instance serve as adhesive (and moisture barrier) between the carpet layer and the anti-slip layer. Suitable adhesives may be selected from the group comprising but not limited to co-polyamide, co-polyester, polyethylene, such as e.g. LDPE or HDPE, EVA, latex, etc...,

Referring now to FIG. 5 an embodiment of a lining 3 according to the present invention is illustrated. The lining 3 has a composite carpet structure comprising an anti-slip layer 1 having back loops 2 projecting from the underside 7 thereof. The anti-slip layer is fixed to un upper (decorative) carpet layer 4. The anti-slip layer 1 is preferably an anti-slip layer that has the characteristics as defined above. The carpet layer 4 of the lining provides an attractive appearance, is resilient, and functions to absorb water and mud when the lining is in use. More specifically, the carpet layer may be made of any suitable facing material which can be properly anchored in the bonding layer. Fabrics, especially carpet-grade fabrics, are most usually utilized but layers formed of flocking consisting of individual fibers embedded in the bonding layer can also be utilized where economics and wear specifications permit such use. Most preferably the carpet layer is a tufted carpet produced by stitching loops of yarn into a woven or non-woven backing. Preferably the tops of the loops are cut to form a cut pile surface, because such a surface is more effective in absorbing soil. Preferably the pile consists of a synthetic fiber such as nylon, polypropylene, polyester or acrylic yarn, because such synthetic fibers provide a pile surface which is easily cleaned, resistant to wear, and unaffected by light or moisture. The carpet layer may consist of a single or of multiple layers.

In a preferred embodiment, referring to FIG. 5, the lining may further comprise a fabric strip 6 at its outer edges, which covers the outside boundary regions of the carpet layer 4 and the anti-slip layer 1. Some back loops may lie in the boundary region, which is overlapped with the fabric strip. The strip can be applied over the back loops and the back loops may thereby be somewhat crushed. Alternatively, back loops may also be cut off in the boundary region, or may be crushed by warming up so that only a not-disturbing small embossment (not shown) for the original back loops remains. The fabric strip is generally strongly attached to the boundary region, so that under the fabric strip the boundary regions of the anti-slip layer are pressed together.

Also the anti-slip lining according to the present invention is characterized by a number of technical parameters such as type of weight, thickness, slipping resistance properties, which are discussed in more detail below.

In one embodiment, the present anti-slip lining comprises a weight per unit area from 1000 to 5000 g/m², and preferably from 1500 to 3000 g/m².

The present anti-slip lining is further characterized in that it may have a thickness of between 0.4 and 4 cm, and preferably of between 0.5 and 2.0 cm.

In another embodiment the present anti-slip lining is characterized by its tensile strength. The tensile strength is defined herein as the force that has to be applied to the lining in order to tear the carpet layer apart from the anti-slip layer. The present anti-slip lining preferably has a tensile strength of at least 30N, and preferably of at least 40 N, and more preferably of at least 45 N.

In another embodiment the present anti-slip lining is characterized by its slip resistance. The slip resistance is defined herein as the force to which the lining resists without showing slippage. The present anti-slip lining preferably has a slip resistance which is higher than 30 N, and preferably higher than 40 N and more preferably higher than 45 N.

The present invention thus provides an anti-slip floor mat having the following properties. Advantageously, it may be applied on various types of carpeted surface, without the need of providing fastening means on the carpeted surface and/or on the floor mat for fixation thereof. It further greatly diminishes the risk of slipping of the floor mat when applied on a carpeted surface. Furthermore, it provides sufficient resistance and stability to the floor mat in the longitudinal and the transverse direction against slipping and deformation. It also reduces wear and tear and improves durability of the covered carpeted surface. Another major advantage is that the present mat is secured on an carpeted surface in place regardless of whether the mat is properly positioned in the floor area or not. No alignment or other active intervention by the user is required. In addition, it permits to reduce noise and provides some thermal isolation.

Its manufacturing process is simple and cost-effective. The floor mats are preferably fabricated starting from large mats consisting of a pile fabric of which the underside is provided with a backing as defined herein. These large mats are subsequently cut into smaller floor mats of various sizes.

When the lining is applied by its anti-slip layer to (a part of) a carpeted surface, the compressed back loops of the anti-slip layer will penetrate into the carpet in between the loops of the carpet preferably over the complete surface of the carpet. The anti-slip layer inhibits the lining to slip on the carpet.

A further advantage of this invention lies in the fact that the anti-slip layer does not increase the rigidity of the lining. The anti-slip layer and thus also the lining remains flexible and can adapt in a flexible way to shape and contours of an underlying carpeted surface. When the anti-slip lining is applied to (a part of) a carpeted surface, it will, because of its flexibility, adapt to the structure and configuration of the carpet. It can also follow the angles and grooves of said carpet. The back loops of the anti-slip layer penetrate on a large part of the surface of the carpet. By simple application of the lining onto a carpet, a slip-resistant, anchoring of the anti-slip lining onto the carpet can be obtained. When a pressure is exerted on the lining, e.g. by walking over the carpeted structure, or by a pressing a drivers foot onto the lining, the lining will even be more pressed and anchored into the underlying carpet, which greatly reduces movements of the lining in case of feet movements.

The anti-slip linings according to the present invention are particularly suitable for covering a carpeted surface. They may be used to cover any type of carpeted surfaces which present problems with respect to movement of mats. The present anti-slip lining may for instance be applied in office buildings and other heavy traffic areas, where such protective linings are used frequently to protect carpeting. They may also be used for covering any type of domestic mats, e.g. mats used for cleaning shoes in the entryways of a domestic house, etc.

The present lining may also be used in the automobile sector for covering carpets in an automobile or other vehicle. The covering of sloped and irregularly-shaped carpeted surfaces of automobiles presents a particularly important utility for linings according to the present invention. Such surfaces, because of the slopes and the various directions of slopes, must be provided with a highly movement-resistant pad in order to avoid wrinkling, bunching up, slipping, etc... Linings can be provided specifically for a car model which will provide an added margin of safety, increased protection to the vehicle's original carpeting and improved interior appearance.

The anti-slip layer and anti-slip lining according to the present invention are preferably manufactured as follows. In one embodiment, the anti-slip lining according to the present invention is preferably manufactured by the following method comprising the steps of:
providing a carpet layer,
providing an anti-slip layer according to the present invention wherein said anti-slip layer substantially consists of a structured needle felt forming back loops projecting from the underside of said layer, and wherein the underside of said anti-slip layer and the back loops projecting there from are thermally compressed, and
attaching the anti-slip layer to the underside of the carpet layer in order to obtain a lining in such a way that the back loops from the anti-slip layer project from the underside of the lining.

In a more preferred embodiment, the present invention provides a method for producing an anti-slip lining as defined herein comprising the steps of:
a) performing a needle punching process using barbed needles in order to obtain a needle felt wherein the individual fibers have been entangled,
b) performing a needle punching process using fork needles in order to obtain a structured needle felt forming back loops projecting from one side thereof,
c) heating the side of said structured needle felt forming back loops projecting therefrom in order to obtain an said anti-slip layer, and
d) attaching said anti-slip layer to the underside of a carpet layer in order to obtain an anti-slip lining.

Step a) in the above method comprises a needle felting process, whereby a needle felt material is obtained which preferably is a flat non woven material 9 (see Fig. 2). This first step involves a process whereby barbed steel needles are moved in and out the material comprising fibers, such that the fibers are reoriented and entangled in the material. Preferably, the process step is characterized in that the number of stitches applied per cm² of the material comprised between 90 and 300 stitches per cm², and preferably between 140 in 300 stitches per cm². The flat needle felt material obtained after step a) generally has a weight per unit area from 250 to 500 g/m², and preferably from 350 to 450 g/m², and a thickness of between 0.3 and 3 cm, and preferably of between 0.5 and 1.0 cm. In an example the needle felt material obtained after step a) may have a weight per unit area of 400 g/m² ± 40 g/m², and a thickness of 0.65 cm ± 0.6 cm.

Step b) of the above method comprises a needle felting process, whereby fork needles are used, in order to obtain structured needle felt 10 (see Fig. 3) that forms loops on one side of the material. In said further needle felting process, a special type of needles, also called fork needles, are used, which carry tufts of fibers into lamella bars. This process step is in particular characterized in that loops of fiber material are formed on one side of the needle felt material. Preferably, this process step is characterized in that the number of stitches applied per cm² of the material is lower than 200 stitches per cm² and preferably lower than 140 stitches per cm².

Subsequently, the underside of said structured needle felt is heated, preferably by infra read heating. As the anti-slip layer substantially comprising (needled) felt fibers having thermoplastic properties, the anti-slip layer is preferably heated to a temperature which falls within the thermoplastic temperature range of the (needled felt) fibers, and which is preferably lower than 265°C and preferably higher than 100°C, and more preferably comprised between 150°C and 260°C. This causes the underside of the layer and the back loops projecting there from to melt, at least partially. The infra-red treated surface of the layer that has been given this treatment becomes a mass of melted fibers and un-melted fibers that exhibit some loops of melted fibers projecting downwardly from the treated surface. The surface as such shows areas of melted and resolidified plastic with loops of fibers projecting downwardly like stiff fur on a skin. These thermally compressed loops obtain a hard and beady structure and provide an attachment means to anchor the layer to a carpeted surface to maintain it in position when applied on the layer. After the heat treatment, the obtained material is cooled at room temperature.

In a next step, the anti-slip layer is attaching to the underside of a carpet layer in order to obtain an anti-slip lining. Preferably the anti-slip layer is attached to the carpet layer in such a way that the back loops from the anti-slip layer project from the underside of the lining. One way of attaching an anti-slip layer to the underside of a carpet layer consists of providing a thermoplastic adhesive on top of a carpet layer, e.g. EVA, PE HDPE LDPE, co-polyamide, co-polyester, latex, etc.., that are melted to temperatures of at least 90°C. Subsequently, the side of the carpet layer provided with melted thermoplastic adhesive and the anti-slip layer manufactured as defined above are pressed together.

The present method is illustrated in **FIG. 1 - 5****.** **FIG. 1** is a schematic representation of a web of fibers 5 that will be subjected to a needle punching process using a needle punching apparatus 8 having barbed needles 12. **FIG. 2** shows a flat non woven needle felt material 9, obtained after the needle punching process illustrated in Fig. 1. The flat non woven needle felt material 9 will now be subjected to a needle punching process using a needle punching apparatus 11 having fork needles 13. In **FIG. 3****,** a structured needle felt 10 is illustrated which comprises a flat non woven material 9 that has been needle punched so as to form back loops 2 projecting from the underside 7 of said felt 10. **FIG. 4** illustrates the felt 10 of figure 3 obtained after infra read heating: the back loops 2 have obtained a hard and beady structure. **Fig. 5** illustrates the bonding of a carpet layer 4 to the present anti-slip layer 1 of Fig. 4.

The present invention further relates to an anti-slip layer obtainable by performing steps a) to c) of the above defined method. The present invention also relates to an anti-slip lining obtainable by performing steps a) to d) of the above defined method.

The present method has the advantage that one side of the anti-slip layer, in particular the upper side, remains complete and thus acoustically effective, while on the other side (underside) of the layer thermally compressed back loops are formed. The backside is hard and beady; the surface of the anti-slip layer is soft and has consequently acoustic effects. The thermally compressed back loops have the characteristics of being able to clawing themselves into an underlying carpeted surface, and to provide slipping resistance. Preferably, heating only takes place in the thermoplastic temperature range such that the fibers in the layer are not de-polymerized. The above-described thermal treatment of the anti-slip layer has the advantage that latent tensions which could lead to shrinking and dent formations in the anti-slip layer are eliminated.

In summary, the anti-slip lining of the present invention provides an improved solution to the mat slippage problem. The anti-slip lining may be immediately, automatically and firmly secured in place, regardless of mat placement within the floor well. Lining slippage is avoided without requiring precise mat alignment. Furthermore, the present anti-slip lining does not require the presence of any type of fasteners on the carpeted surface for ensuring good gripping properties.

It is further noted that the present invention also relates to a car comprising one or more car floor mat as defined herein.

From the foregoing detailed description of illustrative embodiments of the invention, it will be readily apparent to those skilled in this art that various modifications, substitutions, variations, etc. can be made without departing from the scope of the invention as defined by the claims appended hereto.

In the drawings, the following reference signs have been used.
- 1: anti-slip layer
- 2: back loops
- 3: anti-slip lining
- 4: carpet layer
- 5: web of fibers
- 6: fabric strip
- 7: underside of pile fabric
- 8: needle punching apparatus with barbed needles
- 9: needle felt material
- 10: structured needle felt material
- 11: needle punching apparatus with fork needles
- 12: barbed needle
- 13: fork needle

## Claims

1. A removable anti-slip lining (3), in particular a floor mat, for inhibiting slippage on a carpeted surface, comprising a carpet layer (4) and an anti-slip layer (1) that is attached to the underside of said carpet layer,
wherein said anti-slip layer (1) substantially consists of a structured needle felt (10) forming back loops (2) projecting from the underside of said layer, and
wherein the underside (7) of said anti-slip layer (1) and the back loops (2) projecting there from are thermally compressed.

2. Anti-slip lining according to claim 1, wherein said anti-slip layer (1) substantially comprises synthetic needled felt fibers selected from the group comprising polyolefin fibers such as propylene fibers, polyethylene fibers, polyester fibers, polyamide fibers, polyacrylic fibers, polyvinyl fibers, polyaldehyde fibers, polycarbonate fibers or any mixtures thereof.

3. Anti-slip lining according to claims 1 or 2, wherein the height of the back loops (2) projecting from the underside of the anti-slip layer is between 0.2 and 2 cm, and preferably between 0.2 to 0.4 cm.

4. Anti-slip lining according to any of claims 1 to 3, wherein the back loops (2) are uniformly distributed over the complete surface of the anti-slip layer.

5. Anti-slip lining according to any of claims 1 to 4, wherein the back loops (2) are arranged in parallel rows on the underside (7) of said anti-slip layer.

6. Anti-slip lining according to any of claims 1 to 5, wherein the distance between two adjacent rows of back loops (2) is comprised between 0.3 and 1.5 cm, and preferably comprised between 0.5 and 1 cm.

7. Anti-slip lining according to any of claims 1 to 6, wherein the back loops (2) of the anti-slip layer (1) are distributed in an orthogonal raster structure.

8. Anti-slip lining according to any of claims 1 to 7, wherein the anti-slip layer (1) comprises a weight per unit area from 280 to 800 g/m².

9. Anti-slip lining according to any of claims 1 to 8, wherein the anti-slip layer (1) has a thickness comprised between 0.1 and 1 cm, and preferably between 0.2 and 0.5 cm.

10. Anti-slip lining according to any of claims 1 to 9, comprising a weight per unit area from 1000 to 5000 g/m².

11. Anti-slip lining according to any of claims 1 to 10, having a thickness of between 0.4 and 4 cm, and preferably of between 0.5 and 2.0 cm.

12. Anti-slip lining according to any of claims 1 to 11, having a tensile strength of at least 30N.

13. Anti-slip lining according to any of claims 1 to 12, having a slip resistance which is higher than 30 N.

14. Anti-slip lining according to any of claims 1 to 13, wherein the carpet layer (4) and the anti-slip layer (1) are attached to each other by means of an adhesive, preferably a hot melt adhesive, most preferably selected from the group comprising co-polyamide, co-polyester, LDPE, HDPE, EVA, latex.

15. Method for producing an anti-slip lining as defined in any of claims 1 to 14 comprising the steps of:
a) performing a needle punching process using barbed needles (12) in order to obtain a needle felt (9) wherein the individual fibers have been entangled,
b) performing a needle punching process using fork needles (13) in order to obtain a structured needle felt (10) forming back loops (2) projecting from one side thereof,
c) heating the side (7) of said structured needle felt (10) forming back loops (2) projecting therefrom in order to obtain an said anti-slip layer (1), and
d) attaching said anti-slip layer (1) to the underside of a carpet layer (4) in order to obtain an anti-slip lining (3).

16. Anti-slip layer obtainable by performing steps a) to c) of the method of claim 15.

17. Anti-slip lining obtainable by performing the method of claim 15.

18. Car comprising one or more anti-slip linings as defined in any of claims 1 to 14 and 17.

## Patentansprüche

1. Abnehmbare Antirutschbeschichtung (3), insbesondere eine Bodenmatte, zur Verhinderung des Schlupfes auf einer Teppichoberfläche, umfassend eine Teppichschicht (4) und eine Antirutschschicht (1), die an der Unterseite der Teppichschicht befestigt ist,
wobei die Antirutschschicht (1) im Wesentlichen aus einem strukturierten Nadelfilz (10) besteht, der Schlaufen (2) ausbildet, die aus der Unterseite von der Schicht hervorstehen, und
wobei die Unterseite (7) von der Antirutschschicht (1) und die Schlaufen (2), welche daraus hervorstehen, thermisch komprimiert sind.

2. Antirutschbeschichtung nach Anspruch 1, wobei die Antirutschschicht (1) im Wesentlichen synthetische Nadelfilzfasern umfasst, welche ausgewählt sind aus der Gruppe bestehend aus der Gruppe umfassend Polyolefinfasern wie beispielsweise Propylenfasern, Polyethylenfasern, Polyesterfasern, Polyamidfasern, Polyacrylfasern, Polyvinylfasern, Polyaldehydfasern, Polycarbonatfasern oder jegliche Mischungen daraus.

3. Antirutschbeschichtung nach Anspruch 1 oder 2, wobei die Höhe der Schlaufen (2), welche aus der Unterseite von der Antirutschschicht hervorstehen, zwischen 0,2 und 2 cm und vorzugsweise zwischen 0,2 und 0,4 cm liegt.

4. Antirutschbeschichtung nach einem der Ansprüche 1 bis 3, wobei die Schlaufen (2) gleichmäßig über die gesamte Oberfläche von der Antirutschschicht verteilt sind.

5. Antirutschbeschichtung nach einem der Ansprüche 1 bis 4, wobei die Schlaufen (2) in nebeneinanderliegenden Reihen an der Unterseite (7) von der Antirutschschicht angeordnet sind.

6. Antirutschbeschichtung nach einem der Ansprüche 1 bis 5, wobei der Abstand zwischen zwei benachbarten Reihen der Schlaufen (2) zwischen 0,3 und 1,5 cm und vorzugsweise zwischen 0,5 und 1 cm umfasst.

7. Antirutschbeschichtung nach einem der Ansprüche 1 bis 6, wobei die Schlaufen (2) von der Antirutschschicht (1) in einer orthogonalen Rasterstruktur verteilt sind.

8. Antirutschbeschichtung nach einem der Ansprüche 1 bis 7, wobei die Antirutschschicht (1) eine flächenbezogene Masse von 280 bis 800 g/m² umfasst.

9. Antirutschbeschichtung nach einem der Ansprüche 1 bis 8, wobei die Antirutschschicht (1) eine Dicke zwischen 0,1 und 1 cm und vorzugsweise zwischen 0,2 und 0,5 cm umfasst.

10. Antirutschbeschichtung nach einem der Ansprüche 1 bis 9, die eine flächenbezogene Masse von 1.000 bis 5.000 g/m² umfasst.

11. Antirutschbeschichtung nach einem der Ansprüche 1 bis 10, die eine Dicke zwischen 0,4 und 4 cm und vorzugsweise zwischen 0,5 und 2,0 cm umfasst.

12. Antirutschbeschichtung nach einem der Ansprüche 1 bis 11, die eine Zugfestigkeit von mindestens 30 N aufweist.

13. Antirutschbeschichtung nach einem der Ansprüche 1 bis 12, die einen Rutschwiderstand aufweist, welcher höher als 30 N ist.

14. Antirutschbeschichtung nach einem der Ansprüche 1 bis 13, wobei die Teppichschicht (4) und die Antirutschschicht
(1) durch einen Klebstoff aneinander befestigt sind, vorzugsweise einem Heißschmelzklebstoff, am meisten bevorzugt ausgewählt aus der Gruppe umfassend Copolyamid, Copolyester, LDPE, HDPE, EVA-Polymer und Latex.

15. Verfahren zur Herstellung einer Antirutschbeschichtung, wie sie in einem der Ansprüche 1 bis 14 festgelegt ist, umfassend die Schritte:
a) Durchführen eines Vernadelungsverfahrens unter Verwendung von Hakennadeln (12), um ein Nadelfilz (9) zu erhalten, **dadurch gekennzeichnet, dass** die einzelnen Fasern miteinander verschlungen worden sind,
b) Durchführen eines Vernadelungsverfahrens unter Verwendung von Gabelnadeln (13), um ein strukturiertes Nadelfilz (10) zu erhalten, wobei Schlaufen (2) ausgebildet werden, die aus einer Seite davon hervorstehen,
c) Erwärmen der Seite (7) des strukturierten Nadelfilzes (10), welches die Schlaufen (2) ausbildet, die aus einer Seite davon hervorstehen, um die Antirutschschicht (1) zu erhalten, und
d) Befestigen der Antirutschschicht (1) an der Unterseite von einer Teppichschicht (4), um eine Antirutschbeschichtung (3) zu erhalten.

16. Antirutschschicht, die mittels der Durchführung der Schritte a) bis c) des Verfahrens von Anspruch 15 erhältlich ist.

17. Antirutschbeschichtung, die mittels der Durchführung des Verfahrens von Anspruch 15 erhältlich ist.

18. Fahrzeug, das eine oder mehrere Antirutschbeschichtungen umfasst, wie sie in einem der Ansprüche 1 bis 14 und 17 festgelegt sind.

## Revendications

1. Revêtement antiglissant amovible (3), en particulier un tapis de sol, pour empêcher de glisser sur une surface de tapis, comprenant une couche de tapis (4) et une couche d'antiglissant (1) qui est attachée au dessous de ladite couche de tapis,
dans lequel ladite couche d'antiglissant (1) se compose sensiblement d'un feutre de structure d'aiguille (10) formant des boucles arrière (2) se projetant du dessous de ladite couche, et
dans lequel le dessous (7) de ladite couche d'antiglissant (1) et les boucles arrière (2) se projetant de cela sont compressés thermiquement.

2. Revêtement antiglissant selon la revendication 1, dans lequel ladite couche d'antiglissant (1) se compose sensiblement de fibres synthétiques de feutre d'aiguille sélectionnées dans le groupe se composant de fibres de polyoléfines comme des fibres de propylène, des fibres de polyéthylène, des fibres de polyester, des fibres de polyamide, des fibres de polyacrylique, des fibres de polyvinyle, des fibres de polyaldéhyde, des fibres de polycarbonate ou n'importe quel mélange de cela.

3. Revêtement antiglissant selon la revendication 1 ou la revendication 2, dans lequel la hauteur des boucles arrière (2) se projetant du dessous de la couche d'antiglissant est entre 0,2 et 2 cm, et de préférence entre 0,2 et 0,4 cm.

4. Revêtement antiglissant selon l'une quelconque des revendications 1 à 3, dans lequel les boucles arrière (2) sont uniformément réparties sur toute la surface de la couche d'antiglissant.

5. Revêtement antiglissant selon l'une quelconque des revendications 1 à 4, dans lequel les boucles arrière (2) sont agencées en lignes parallèles sur le dessous (7) de ladite couche d'antiglissant.

6. Revêtement antiglissant selon l'une quelconque des revendications 1 à 5, dans lequel la distance entre deux lignes adjacentes de boucles arrière (2) est comprise entre 0,3 et 1,5 cm, et de préférence comprise entre 0,5 et 1 cm.

7. Revêtement antiglissant selon l'une quelconque des revendications 1 à 6, dans lequel les boucles arrière (2) de la couche d'antiglissant (1) sont réparties dans une structure de trames orthogonales.

8. Revêtement antiglissant selon l'une quelconque des revendications 1 à 7, dans lequel la couche d'antiglissant (1) comprend un poids par unité de surface de 280 à 800 g/m².

9. Revêtement antiglissant selon l'une quelconque des revendications 1 à 8, dans lequel la couche d'antiglissant (1) a une épaisseur comprise entre 0,1 et 1 cm, et de préférence entre 0,2 et 0,5 cm.

10. Revêtement antiglissant selon l'une quelconque des revendications 1 à 9, comprenant un poids par unité de surface de 1000 à 5000 g/m².

11. Revêtement antiglissant selon l'une quelconque des revendications 1 à 10, ayant une épaisseur entre 0,4 et 4 cm, et de préférence entre 0,5 et 2 cm.

12. Revêtement antiglissant selon l'une quelconque des revendications 1 à 11, ayant une force de tension d'au moins 30 N.

13. Revêtement antiglissant selon l'une quelconque des revendications 1 à 12, ayant une résistance de glissement qui est supérieure à 30 N.

14. Revêtement antiglissant selon l'une quelconque des revendications 1 à 13, dans lequel la couche de tapis (4) et la couche d'antiglissant (1) sont attachées l'une à l'autre au moyen d'un adhésif, de préférence un adhésif à fusion à chaud, sélectionné avec le plus de préférence dans le groupe se composant de co-polyamide, de co-polyester, de LDPE, de HDPE, d'EVA et de latex.

15. Procédé de production d'un revêtement antiglissant selon l'une quelconque des revendications 1 à 14, comprenant les étapes consistant à :
a) effectuer un processus de perforation d'aiguille en utilisant des aiguilles à barbelures (12) pour obtenir un feutre d'aiguille (9) dans lequel les fibres individuelles ont été emmêlées,
b) effectuer un processus de perforation d'aiguille en utilisant des aiguilles à fourche (13) pour obtenir un feutre de structure d'aiguille (10) formant des boucles arrière (2) se projetant d'un côté de cela,
c) chauffer le côté (7) dudit feutre de structure d'aiguille (10) formant des boucles arrière (2) se projetant de cela pour obtenir une dite couche d'antiglissant (1), et
d) attacher ladite couche d'antiglissant (1) au dessous d'une couche de tapis (4) pour obtenir un revêtement antiglissant (3).

16. Couche d'antiglissant pouvant être obtenue en effectuant les étapes a) à c) du procédé de la revendication 15.

17. Revêtement antiglissant pouvant être obtenu en effectuant le procédé de la revendication 15.

18. Voiture comprenant un ou plusieurs revêtements antiglissants selon l'une quelconque des revendications 1 à 14 et 17.
